# EUROPÄISCHE PATENTSCHRIFT

(11) **EP 1 402 325 B1**
(45) Veröffentlichungstag und Bekanntmachung des Hinweises auf die Patenterteilung: **27.09.2006**
(21) Anmeldenummer: 02745134.3
(22) Anmeldetag: 12.06.2002
(51) Int. Cl.: G05B 19/418, G06F 17/50

(54) **VERFAHREN UND SYSTEM ZUR UNTERSTÜTZUNG DER PROJEKTIERUNG VON FERTIGUNGSANLAGEN**
METHOD AND SYSTEM FOR ASSISTING IN THE PLANNING OF MANUFACTURING FACILITIES
PROCEDE ET SYSTEME POUR SOUTENIR LES PROJETS DE CONSTRUCTION D'USINES

(30) Priorität: 13.06.2001 DE 10128525
(43) Veröffentlichungstag der Anmeldung: 31.03.2004
(73) Patentinhaber: ROBERT BOSCH GMBH, 70442 Stuttgart (DE)
(72) Erfinder: SCHREIER, Kurt, 73614 Schorndorf (DE); SKERRA, Carsten, 71636 Ludwigsburg (DE); KOBSCHAETZKY, Hans, 74343 Sachsenheim (DE)
(86) Internationale Anmeldenummer: PCT/DE2002/002118
(87) Internationale Veröffentlichungsnummer: WO 2002/101596

(56) Entgegenhaltungen:
- EP-A- 0 415 637
- WO-A-97/12301
- GB-A- 2 258 745
- SPATH, D.; LANDWEHR, R.: "3-D-Projektierung und Simulation von Ablaufsteuerungen" WERKSTATTSTECHNIK, [Online] Bd. 90, Nr. 7/8, 31. August 2000 (2000-08-31), Seiten 292-296, XP002254620 ISSN: 1436-5006 Gefunden im Internet: <URL:http://www-wbk.mach.uni-karlsruhe.de/ index_de.html> [gefunden am 2003-09-01]
- ANONYMOUS: "CATIA Version 5 Release 6 Solutions application portofolio" INTERNET ARTICLE, [Online] 3. Mai 2001 (2001-05-03), XP002254619 Gefunden im Internet: <URL:http://web.archive.org/web/2003090201 1224/http://www-3.ibm.com/solutions/engine ering/broch/v5r6_a4.pdf> [gefunden am 2003-09-02]
- MOORTHY S: "INTEGRATING THE CAD MODEL WITH DYNAMIC SIMULATION: SIMULATION DATA EXCHANGE" PROCEEDINGS OF THE 1999 WINTER SIMULATION CONFERENCE, [Online] 5. - 8. Dezember 1999, Seiten 276-280, XP002254621 Phoenix, Arizona, USA Gefunden im Internet: <URL:http://www.inform-cs.org/wsc99papers/ 038.pdf> [gefunden am 2003-09-02]
- ROSSGODERER U ET AL: "A CONCEPT FOR AUTOMATICAL LAYOUT GENERATION" PROCEEDINGS OF THE INTERNATIONAL CONFERENCE ON ROBOTICS AND AUTOMATION. NAGOYA,JAPAN, MAY 21 - 27, 1995, NEW YORK, IEEE, US, Bd. 1, 21. Mai 1995 (1995-05-21), Seiten 800-805, XP000657267 ISBN: 0-7803-1966-4
- ANONYMOUS: "COSIMIR ROBOTERSIMULATION AUF PCs" INTERNET ARTICLE, [Online] 31. Dezember 1998 (1998-12-31), XP002254622 Gefunden im Internet: <URL:http://www.irf.uni-dortmund.de/cosimi r/prospekt.d/pdf/cosimir_5.pdf> [gefunden am 2003-09-01]
- WECK M ET AL: "ABTEILUNGSUEBERGREIFENDES PROJEKTIEREN KOMPLEXER MASCHINEN UND ANLAGEN METHODIK UND SYSTEMKONZEPT ZUR VERBESSERUNG DER ZUSAMMENARBEIT" VDI Z, VDI VERLAG GMBH. DUSSELDORF, DE, Bd. 137, Nr. 10, 1. Oktober 1995 (1995-10-01), Seiten 54,57-60, XP000535816 ISSN: 0042-1766

## Beschreibung

Die Erfindung betrifft ein Verfahren, ein System und eine elektronische Einheit zur Unterstützung der Projektierung von Fertigungsanlagen. Des weiteren betrifft die Erfindung ein Computerprogramm und ein Computerprogrammprodukt zur Durchführung des erfindungsgemäßen Verfahrens. Die Fertigungsanlagen weisen dabei mindestens eine Fertigungseinrichtung auf.

### Stand der Technik

Gegenwärtig werden im Bereich der Projektierung und Umsetzung von Fertigungsanlagen keine rechnergestützten durchgängigen Arbeitsumgebungen unterstützt. In Einzelfällen werden Detaillösungen, wie beispielsweise Computer-Aided-Design-Systeme (CAD) oder Produkt-Daten-Management-Systeme (PDM) eingesetzt, doch beschreiben diese weder die Kinematik von Maschinenanlagen vollständig noch berücksichtigen diese Aspekte der Elektrotechnik und der Ablaufsteuerung.

Gerade im Bereich der Projektierung erscheint es aber sinnvoll, Simulationswerkzeuge einzusetzen, um bereits vor der Umsetzung sicherstellen zu können, daß die projektierte Anlage den gestellten Anforderungen entspricht. Hierfür bietet sich der Einsatz eines Simulationswerkzeugs an.

Aktuelle Simulationswerkzeuge setzen jedoch eine vorherige vollständige Modellierung der gesamten Fertigungsanlage mit deren Teilsystemen voraus, um weitergehende Analysen durchführen zu können siehe z.B.: Spath D, Landwehr R., "3-D-Projektierung und Simulation von Ablaufsteuerungen", Werkstattstechnik, Bd.90 (2000), Nr. 7/8, Seiten 292-296. Dies ist beispielsweise bei Paketen zur Simulation von Robotern oder auch in begrenztem Umfang bei Werkzeugmaschinen im Bereich der Zerspanungstechnik der Fall.

### Vorteile der Erfindung

Das erfindungsgemäße Verfahren dient zur Unterstützung der Projektierung von Fertigungsanlagen. Dabei wird die Fertigungsanlage als ein Objekte enthaltendes digitales Modell abgebildet. Dieses digitale Modell wird für eine Analyse in eine Simulationsumgebung eingebettet. Dabei umfaßt es alle Informationen, die für die Simulationsumgebung zur Simulation von Fertigungseinrichtungen notwendig sind.

Die Simulationsumgebung umfaßt das Laden der Objekte aus dem digitalen Modell und verschiedene Möglichkeiten der Modellierung. Zugleich bildet es die Ablaufumgebung, um steuerungstechnische Anlagenelemente, wie bspw. SPS-Controller, anzubinden und zu simulieren.

Vorzugsweise umfaßt das Verfahren zusätzlich einen Funktionsblock für einen Engineering-Prozeß, in dem Produktionsabläufe abgebildet werden können und mit dem unter Einsatz von Simulationstechnik Prozeßabläufe und Datenflüsse innerhalb des digitalen Modells abgebildet werden. Der Engineering-Prozeß umfaßt somit die Abbildung eines neuen Prozeßablaufs, der den Einsatz von Simulationstechnik mit einbezieht. Zugleich bildet dieser den Datenfluß innerhalb des digitalen Modells ab.

Zweckmäßigerweise enthält das digitale Modell zusätzliche Informationen, die einer Arbeitsumgebung zugänglich sind und von dieser zur Lenkung und Verwaltung von spezifischen und nativen Daten im Prozeßablauf verwendet werden. Dies dient der Unterstützung der Engineering-Prozesse bei der Projektierung und Umsetzung von Fertigungsanlagen.

In Ausgestaltung des erfindungsgemäßen Verfahrens umfaßt das digitale Modell Objekte, die Geometriedaten, Kinematikdaten, elektrische Eigenschaften und steuerungstechnische Funktionsblöcke enthalten. Ebenfalls kann das digitale Modell Beziehungen der Objekte zueinander aufweisen, wie bspw. konstruktionsrelevante, funktionsrelevante und/oder ablaufrelevante Beziehungen.

Vorteilhafterweise wird bei dem erfindungsgemäßen Verfahren zusätzlich eine Kopplung zu Steuerungssystemen durchgeführt, so daß die Steuerungssysteme mit den abgebildeten Fertigungseinrichtungen Informationen austauschen. Somit werden nicht nur reale Konstruktionsdaten sondern auch originale Steuerungsprogramme der Maschinen genutzt. Dabei werden die Aspekte der Modellierung von Sensorik und Aktorik sowie die normgerechte Bezeichnung in einer einheitlichen durchgängigen Datenbasis integriert. Die eingesetzten Steuerungssysteme entsprechen zweckmäßigerweise den in realen Fertigungseinrichtungen eingesetzten Steuerungssystemen.

Das erfindungsgemäße System zur Unterstützung der Projektierung einer mindestens eine Fertigungseinrichtung aufweisenden Fertigungsanlage. In dem System ist ein die Fertigungsanlage als ein Objekte enthaltendes digitales Modell und eine Simulationsumgebung enthalten, in die das digitale Modell eingebettet ist.

Das System ist somit ein digitales Modell, daß alle Informationen, die für die Simulationsumgebung zur Simulation von Fertigungseinrichtungen notwendig sind, enthält.

In Ausgestaltung des erfindungsgemäßen Systems ist zusätzlich ein Funktionsblock für einen Engineering-Prozeß eingebunden, in dem Produktionsabläufe abgebildet werden können und mit dem unter Einsatz von Simulationstechnik Prozeßabläufe und Datenflüsse innerhalb des digitalen Modells abzubilden sind.

Mit dem Engineering-Prozeß kann ein Prozeßablauf unter Einbeziehung von Simulationstechnik abgebildet werden.

Das System stellt bei dieser Ausführungsform eine sogenannte Digitale Sondermaschine (DSM) dar, die eine Arbeitsumgebung zur Unterstützung der Engineering-Prozesse bei der Projektierung und Umsetzung von Fertigungsanlagen bereitstellt. Die DSM umfaßt drei Funktionsblöcke, nämlich das digitale Modell, die Simulationsumgebung und den Engineering-Prozeß.

In der DSM werden vorzugsweise die realen Fertigungseinrichtungen als digitales Modell abgebildet und stehen in einer Simulationsumgebung für weitere Analysen zur Verfügung. Durch die Kopplung zu Steuerungssystemen wird eine frühzeitige Inbetriebnahme von Fertigungseinrichtungen ermöglicht.

Weitere bevorzugte Ausführungsformen des erfindungsgemäßen Systems ergeben sich aus den Unteransprüchen.

Die erfindungsgemäße elektronische Einheit weist eine Recheneinheit und eine Speichereinrichtung auf. In der Speichereinrichtung ist ein zuvor beschriebenes System abgelegt. Die Recheneinheit dient zur Durchführung eines zuvor beschriebenen Verfahrens.

Das Computerprogramm umfaßt Programmcodemittel zum Ausführen der Schritte des vorstehend beschriebenen Verfahrens und wird auf einem Computer oder einer entsprechenden Recheneinheit durchgeführt.

Das Computerprogrammprodukt ist auf einem computerlesbaren Datenträger gespeichert. Als geeignete Datenträger kommen EEPROMs und Flashmemories, aber auch CD-ROMs, Disketten sowie Festplattenlaufwerke in Betracht.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt schematisch eine bevorzugte Ausführungsform des erfindungsgemäßen Systems anhand eines Ablaufdiagramms.
- Figur 2: zeigt eine modellierte Fertigungsanlage.
- Figur 3: verdeutlicht in einer schematischen Abbildung eine Schnittstelle zwischen einem Simulationsmodell und einem Steuerungskonzept.
- Figur 4: erläutert einen Funktionsbaustein aus Figur 3.

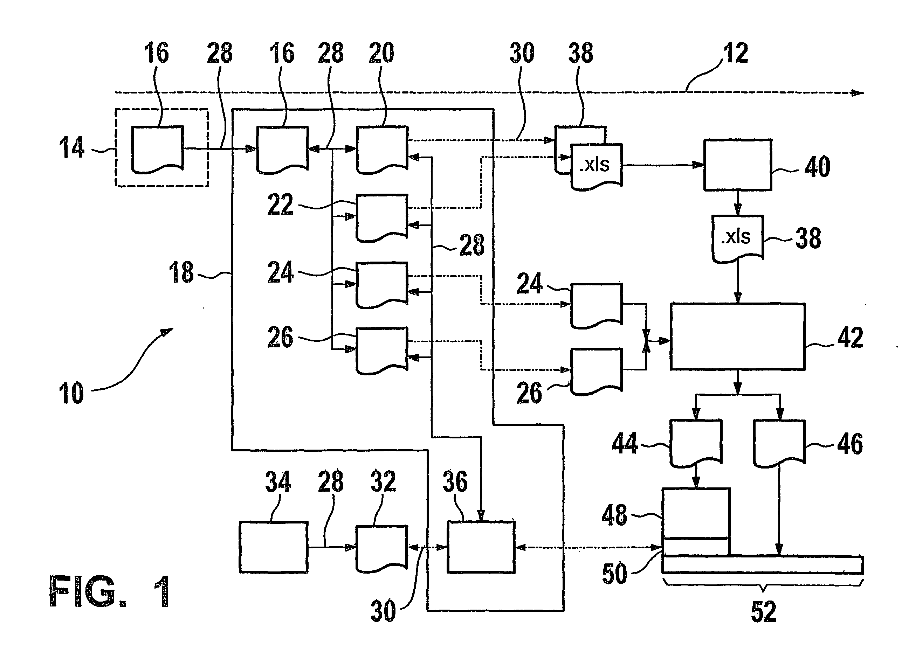

In Figur 1 ist eine bevorzugte Ausführungsform des erfindungsgemäßen Systems, insgesamt mit der Bezugsziffer 10 bezeichnet, schematisch dargestellt. In der Darstellung sind Softwaresysteme, Schnittstellen zu externen Systemen, interne Schnittstellen, Objekte des digitalen Models und ein Softwarepaket der digitalen Sondermaschine dargestellt.

Ein unterbrochener Pfeil 12 verdeutlicht den Ablauf des Engeneering-Prozesses.

Ein erster Block 14 verdeutlicht die mechanische Planungsphase. In diesem ist ein Objekt 16 des digitalen Modells, nämlich eine technische Übersicht, enthalten. Ein weiterer Block 18 enthält das mechanische Design, somit den Aufbau der zu entwickelnden Fertigungsanlage. In diesem sind die Objekte technische Übersicht 16, Basisdiagramm 20, Schaltkreisdiagramm 22, Zykluszeitberechnung 24 und Flußdiagramm-Beschreibung 26 enthalten. Durchgezogene Pfeile 28 verdeutlichen interne Schnittstellen. Strichpunktierte Pfeile 30 veranschaulichen Schnittstellen zu externen Systemen.

Die beschriebenen Objekte werden zusammen mit einem Objekt CAD-Modell 32, das von einem Softwaresystem PRO/E 34 bereitgestellt wird, einem Simulationswerkzeug 36 zur Verfügung gestellt. Für die elektrische Koordination sind für die elektrische Hardware Objekte 38 und für die elektrische Software weitere Objekte, nämlich das Objekt 24 für die Zykluszeitberechnung und das Objekt 26 für die Flußdiagrammbeschreibung vorgesehen.

Zur Verarbeitung der Objekte 38 steht ein Softwaresystem EPLAN 40 zur Verfügung dessen Ausgabe ebenso wie die Objekte 24 und 26 in ein Softwaresystem OpCon 42 eingegeben werden. Dieses generiert die Objekte PLC-Programm 44 und OPLES-Programm 46.

Das Objekt 44 wird in ein Softwaresystemcode sysPLC 48 eingegeben, das Resultat des Simulationswerkzeuges 36 in ein Softwaresystem OPC 50. Als Ergebnis ergibt sich ein Softwaresystem 52, das eine lauffähige simulierte Abbildung der Fertigungsanlage darstellt.

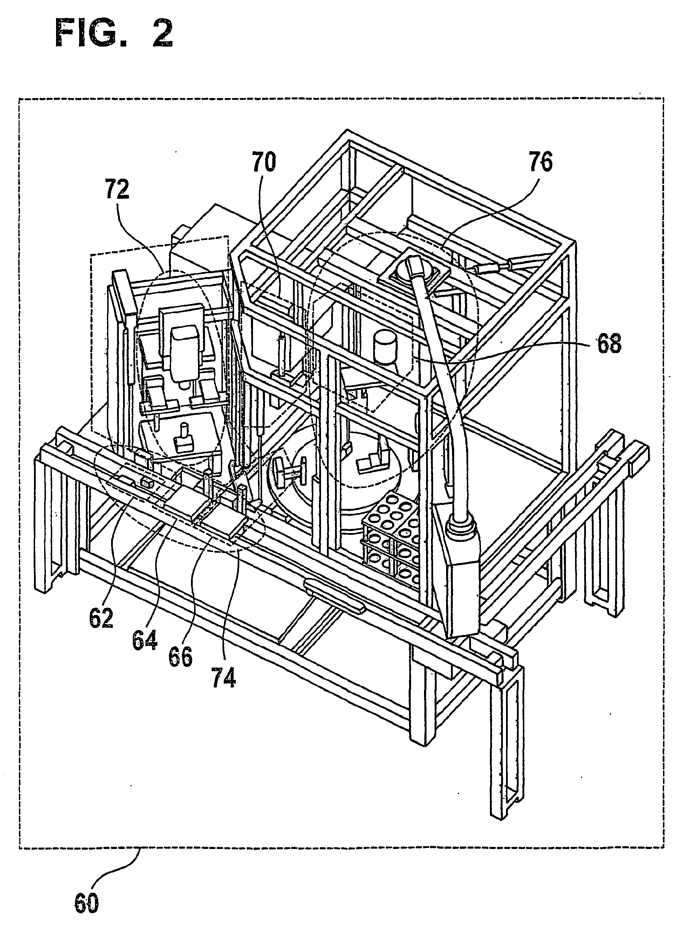

In Figur 2 ist ein Beispiel für eine modellierte Fertigungsanlage als funktionale Einheit 60 dargestellt. In der Darstellung ist eine erste Arbeitsposition 62, eine zweite Arbeitsposition 64, eine dritte Arbeitsposition 66, eine vierte Arbeitsposition 68 und eine fünfte Arbeitsposition 70 dargestellt.

Des weiteren sind in der Darstellung Sicherheitsoptionen widergegeben, nämlich mit der Bezugsziffer 72 bezeichnet die "nach Not-Aus und Schutztür 1", mit der Bezugsziffer 74 bezeichnet "vor Not-Aus" und mit der Bezugsziffer 76 bezeichnet die Sicherheitsoption "nach Not-Aus und Schutztür 1 und 2".

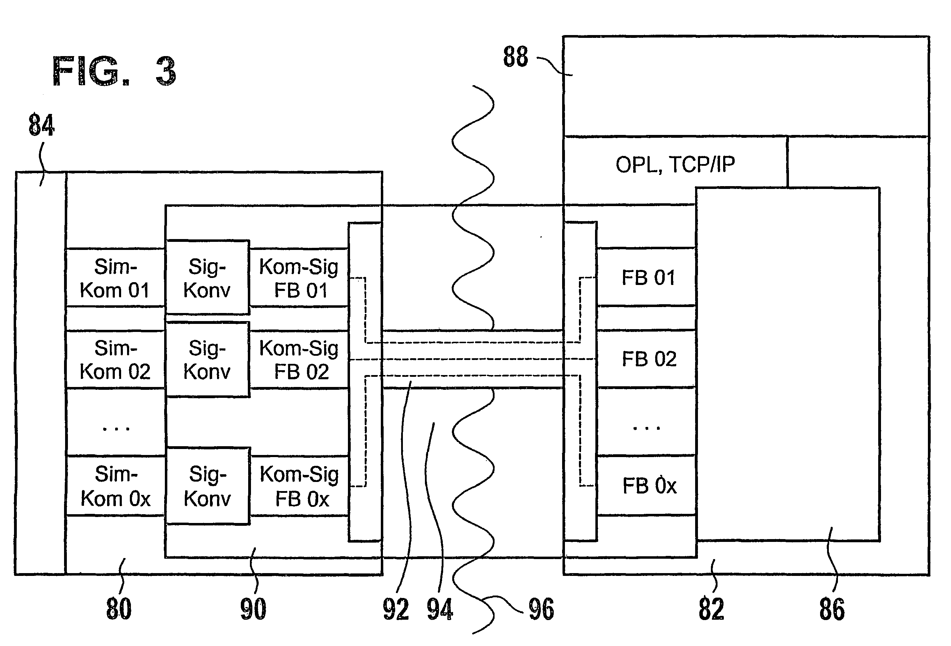

In Figur 3 ist eine Schnittstelle zwischen einem Simulationsmodell und einem Steuerungskonzept "OpCon-Open Control" dargestellt. In der Figur ist ein Simulationsrechner 80 und eine Maschinensteuerung 82 schematisch dargestellt. Der Simulationsrechner 80 enthält ein Simulationsmodell 84. Die Maschinensteuerung 82 umfaßt ein Maschinenablaufprogramm 86 und eine Bedienoberfläche 88 der Steuerung.

Zwischen den beiden Blöcken 80 und 82 befindet sich eine Protokollschicht SimCom 90. Diese enthält logische Verbindungen 92 und physikalische Verbindungen 94. In der Protokollschicht 90 ist eine durch eine geschwungene Linie 96 verdeutlichte Kommunikationsebene via TCP/IP dargestellt.

Als Simulationsrechner 80 wird eine dedizierte Hardware eingesetzt, die für die Simulation eines Maschinenmodells zuständig ist. Dabei ist eine mögliche dreidimensionale Visualisierung zunächst als weitere Funktion dieses Rechners 80 zu behandeln. Das simulierte Maschinenmodell kommuniziert dabei mit einer originalen Maschinensteuerung.

Die Maschinensteuerung 82 entspricht einer Steuerungen, wie sie in der Automatisierungstechnik zur Steuerung von Maschinenfunktionen eingesetzt wird. Die Steuerung 82 besteht im wesentlichen aus dem Laufzeitsystem, das das Maschinenablaufprogramm 86 abarbeitet, der Kommunikation über diverse Feldbussysteme mit den Hardwarekomponenten (Schalter, Antriebe usw.) und der Kommunikation zu einem Maschinenbediener mittels einer Bedienoberfläche, nämlich einer Mensch-Maschine-Schnittstelle (HMI: Human Machine Interface).

Der Simulationsrechner 80 wird gegenwärtig physikalisch über das Ethernet (TCP/IP) mit der Maschinensteuerung 82 verbunden. Die logische Verbindung 92 wird mit der Protokollschicht 90 "SimCOM", die der wesentliche Bestandteil dieser Schnittstelle ist, realisiert.

Das Simulationsmodell 84 beinhaltet die Abbildung der Maschine mit deren Einzelkomponenten. Diese Einzelkomponenten werden sehr abstrakt in ihrem Verhalten simuliert. Dabei kommt es zu Wechselwirkungen, bspw. Kollisionen, die von der Simulationsumgebung erfaßt und in Form von Ereignissen gemeldet werden. In der Simulationsumgebung werden gewöhnlich die Auswertung und die Verarbeitung dieser Information mittels spezifischer Programmiersprachen und Steuerungen durchgeführt. Diese Programmiersprachen und Steuerungen sind üblicherweise nicht ausreichend, um eine reale Maschine zu steuern, da die an eine Maschinensteuerung gestellten Echtzeitanforderung, nämlich Echtzeitfähigkeit, Nebenläufigkeit, Fehlerverhalten und Industrietauglichkeit; nicht erfüllt werden. Dies ist hierbei aber auch nicht die Zielsetzung, da es nur um konzeptionelle Überprüfungen der Modellfunktionen geht.

Die Simulationsumgebung stellt auf der Ebene von Softwarebibliotheken einen Zugriff auf die Einzelkomponenten zur Verfügung. Diese sind sehr abstrakt und bilden in Ihrem Verhalten nicht die Grundelemente der Automatisierungskomponenten ab.

Das Modul Sim-Kom als Simulationskomponente stellt die vereinheitlichte Schnittstelle zur Simulationsumgebung dar.

Das Modul Sim-Kom0x ist spezifisch für jedes Simulationskomponente zu erstellen, daher die Enumeration 0x.

In der Protokollschicht 90 SimCom setzt ein Modul Sig-Kom als Signalkonverter das Verhalten (Trigger, Ereignis, Stati) jeder Einzelkomponente des Simulationsmodells 84 in eine automatisierungsübliche Beschreibung mittels Ein- und Ausgängen sowie deren Signale und Signalverläufe, bspw. auch Signalflanken, um.

Ein Modul Kom-Sig modelliert als Komponentensignal die Einzelkomponente in ihrem Verhalten, und zwar so, daß es einer originalen herstellerspezifischen Steuerungskomponente entspricht. Dabei wird bereits auf die Funktionen des Funktionsbausteins auf der Maschinensteuerungsseite abgestellt. Zwischen den Modulen Kom-Sig FB0x und FB0x wird zu diesem Zeitpunkt bereits eine logische Zuordnung festgelegt.

Bei der Maschinensteuerung 82 handelt es sich um die gleiche Hardware, die auch die Steuerung der realen Maschine übernimmt. Durch ein Umschalten der Kommunikationskanäle auf den Feldbus ist hier eine direkte Steuerung einer Maschine möglich. Das Maschinenablaufprogramm 86 und die eingesetzten Funktionsbausteine müssen nicht mehr modifiziert werden. Die Simulation läuft mit den originalen Steuerungsprogrammen der Maschine ab.

Zur Bedienung der Maschine in den unterschiedlichen Betriebsarten sind Eingriffe durch den Maschinenbediener- oder einrichter ggf. erforderlich. Dazu enthält die Maschinensteuerung 82 eine zusätzliche Bedienoberfläche 88 zum Bedienen und Beobachten, bspw. um Einzelfunktionen der Maschine auszulösen.

Das Maschinenablaufprogramm 86 steuert den Ablauf der Maschine, insbesondere in der Betriebsart Automatik. Die Trennung zu den Funktionsbausteinen ist nicht immer eindeutig. So können etwa die Funktionsbausteine zusätzlich durch das Maschinenablaufprogramm 86 beeinflußt werden. Weitere Betriebsarten können durch das Maschinenablaufprogramm 86 gesteuert werden. Es sind jedoch wesentliche Teile durch die Implementierung der Funktionsbausteine abgedeckt.

Die Bedienoberfläche 88 und das Maschinenablaufprogramm 86 kommunizieren über aktuelle Standards, wie TCP/IP und OPC (OLE: for Production Control). Diese tauschen über eigene Protokolle die Zustände zwischen dem Maschinenablaufprogramm 86 und der Bedienoberfläche 88 aus. Hierbei sei auf das Softwaresystem OpCon verwiesen.

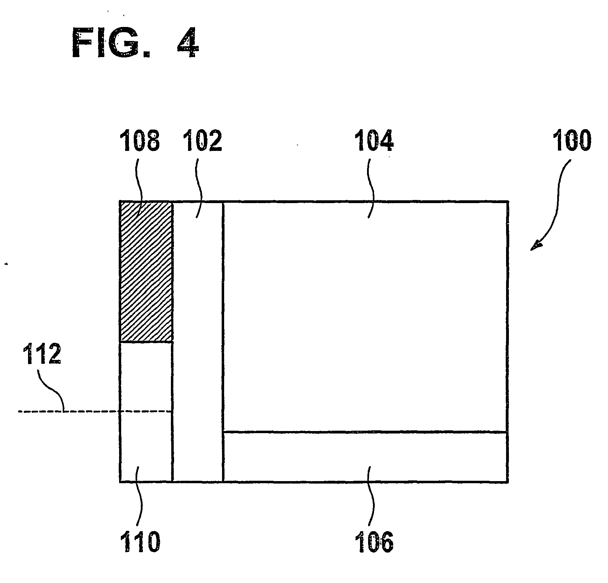

In Figur 4 ist in schematischer Darstellung ein Funktionsbaustein FBOx, insgesamt mit der Bezugsziffer 100 bezeichnet, wiedergegeben. Der Furiktionsbaustein FB0x 100 definiert gegenwärtig die objektbasierte Sicht auf einzelne herstellerspezifische Automatisierungskomponenten. Diese Sicht wird nur einmal erstellt und mehrfach verwendet und unterstützt in deren Programmierung die unterschiedlichen in der Maschine benötigten Betriebsarten sowie eine Fehlerbehandlung und eine festgelegte Kommunikation zum Maschinenablaufprogramm und darüber hinaus zu der Oberfläche.

In der Figur ist ein Block 102 für die Eingabe-Ausgabe-Ebene-Steuerung dargestellt. Durch die Eingabe-Ausgabe-Ebene-Steuerung erhält der Funktionsbaustein 100 eine neue Ebene zur Umschaltung zwischen der Kommunikation zwischen Feldbus und der logischen Verbindung zu dem Modul Kom-Sig FB0x als Komponentensignal einer herstellerspezifischen Einzelkomponente. Diese Umschaltung erfordert keine Umprogrammierung oberhalb der Eingabe-Ausgabe-Ebene-Steuerung 102, so daß ein Umschalten zwischen realer Automatisierungskomponente und simulierter Automatisierungskomponente möglich wird. Dies hat den Effekt, daß es möglich wird, Einzelkomponenten beim Test real anzubinden und die restlichen Komponenten als Simulation zu betreiben.

In dem Funktionsbaustein 100 ist ein Block 104 für die Betriebsarten Handbetrieb, Tippbetrieb und Automatikbetrieb vorgesehen. Ein zusätzlicher Block 106 steht für die zusätzliche Betriebsart Simulation. Ein schraffiert dargestellter Block 108 verdeutlicht die diversen Feldbus-Anschaltungen, wie CAN-Bus oder Profi-Bus. Ein weiterer Block 110 verdeutlicht die SimCom-Protokollschicht. Eine gestrichelte Linie 112 veranschaulicht die logische Verbindung zum Funktionsblock Kom-Sig FB0x.

Die zusätzliche Betriebsart Simulation stellt eine weitere Ebene zur Verfügung, die neue Funktionen im Rahmen der Simulationstechnik ermöglichen. Diese Funktionen können bspw. die durch das Simulationsmodell ausgelöste Reaktion auf Fehlerfälle, ein Szenariomanager, der es erlaubt, den aktuellen Stand der Maschine in die Simulation zu laden oder umgekehrt, eine Abbildung von zusätzlichen Funktionen, die für ein virtuelles Training notwendig sind, also für eine Schulung von Bedienpersonal an einer virtueller Anlage zum Training bestimmter Training- oder Fehlerfälle, sein.

## Patentansprüche

1. Verfahren zur Unterstützung der Projektierung einer mndestens eine Fertigungseinrichtung aufweisenden Fertigungsanlage (60), bei dem die Fertigungsanlage (60) als ein Objekte (16, 20, 22, 24, 26, 32, 38, 44, 46) enthaltendes digitales Modell (10) abgebildet wird und dieses digitale Modell (10) in eine Simulationsumgebung (80) für eine Analyse eingebettet wird, wobei das digitale Modell (10) Objekte (16, 20, 22, 24, 26, 32, 38, 44, 46) umfasst, die Geometriedaten, Kinematikdaten, elektrische Eigenschaften und steuerungstechnische Funktionsblöcke enthalten, und das digitale Modell (10) auch Beziehungen der Objekte (16, 20, 22, 24, 26, 32, 38, 44, 46) zueinander enthält, wobei konstruktionsrelevante Beziehungen funktionsrelevante Beziehungen und ablaufrelevante Beziehungen in dem digitalen Modell (10) enthalten sind, und eine Simulation mit originalen Steuerungsprogrammen der Fertigungseinrichtung abläuft.

2. Verfahren nach Anspruch 1, bei dem zusätzlich ein Funktionsblock für einen Engineering-Prozess eingebunden wird, in dem Produktionsabläufe abgebildet werden können und mit dem unter Einsatz von Simulationstechnik Prozeßabläufe und Datenfllüsse innerhalb des digitalen Modells (10) abgebildet werden.

3. Verfahren nach Anspruch 2, bei dem das digitale Modell (10) zusätzliche Informationen enthält, die einer Arbeitsumgebung zugänglich sind und von dieser zur Lenkung und Verwaltung von spezifischen und nativen Daten im Prozeßablauf verwendet werden.

4. Verfahren nach einem der Ansprüche 1 bis 3, bei dem eine Kopplung zu Steuerungssystemen durchgeführt wird und die Steuerungssysteme mit den abgebildeten Fertigungseinrichtungen Informationen austauschen.

5. Verfahren nach Anspruch 6, bei dem die Steuerungssysteme den in realen Fertigungseinrichtungen eingesetzten Steuerungssystemen entsprechen.

6. Sytsem zur Unterstützung der Projektierung einer mindestens eine Fertigungseinrichtung aufweisenden Fertigungsanlage (60), das ein die Fertigungsanlage (60) als ein Objekte (16, 20, 22, 24, 26, 32, 38, 44, 46) enthaltendes digitales Modell (10) und eine Simulationsumgebung (80), in die das digitale Modell (10) eingebettet ist, enthält, wobei das digitale Modell (10) Objekte (16, 20, 22, 24, 26, 32, 38, 44, 46) umfasst, die Geometriedaten, Kinematikdaten, elektrische Eigenschaften und steuerungstechnische Funktionsblöcke aufweisen, und das digitale Modell (10) auch Beziehungen der Objekte (16, 20, 22, 24, 26, 32, 38,44,46) zueinander enthält, wobei konstruktionsrelevante Beziehungen, funktionsrelevante Beziehungen und ablaufrelevante Beziehungen in dem digitalen Modell (10) enthaten sind und eine Simulation mit originalen Steuerungsprogrammen der Fertigungseinrichtung abläuft.

7. System nach Anspruch 6, bei dem zusätzlich ein Funktionsblock für einen Engineering-Prozess eingebunden ist, in dem Produktionsabläufe abgebildet werden können und mit dem unter Einsatz von Simulationstechnik Prozessabläufe und Datenflüsse innerhalb des digitalen Modells (10) abzubilden sind.

8. System nach Anspruch 7, bei dem das digitale Modell (10) zur Unterstützung des Engineering-Prozesses zusätzliche Informationen enthält, die einer Arbeitsumgebung zugänglich sind und von dieser zur Lenkung und Verwaltung von spezifischen und nativen Daten im Prozessablauf dienen.

9. System nach Anspruch 6, bei dem eine Kopplung zu Steuerungssystemen vorgesehen ist, durch die die Steuerungssysteme mit den abgebildeten Fertigungseinrichtungen Informationen austauschen.

10. System nach Anspruch 9, bei dem die Steuerungssysteme den in realen Fertigungseinrichtungen eingesetzten Steuerungssystemen entsprechen.

11. Elektronische Einheit, mit einer Recheneinheit und einer Speichereinrichtung, wobei in der Speichereinrichtung ein System nach einem der Ansprüche 6 bis 10 abgelegt ist und die Recheneinheit zur Durchführung eines Verfahrens nach einem der Ansprüche 1 bis 5 dient.

12. Computerprogramm mit Programmcodemitteln, um alle Schritte eines Verfahrens nach einem der Ansprüche 1 bis 5 durchzuführen, wenn das Computerprogramm auf einem Computer oder eine entsprechende Recheneinheit, insbesondere einer elektronischen Recheneinheit nach Anspruch 11 ausgeführt wird.

13. Computerprogrammprodukt mit Programmcodemitteln, die auf einem computerlesbaren Datenträger gespeichert sind, um ein Verfahren nach einem der Ansprüche 1 bis 5 durchzuführen, wenn das Computerprogramm auf einem Computer oder auf einer entsprechenden Recheneinheit, insbesondere einer elektronischen Recheneinheit nach Anspruch 11 ausgeführt wird.

## Claims

1. Method for assisting in the planning of a manufacturing facility (60) having at least one manufacturing device, in which the manufacturing facility (60) is represented as a digital model (10) containing objects (16, 20, 22, 24, 26, 32, 38, 44, 46) and this digital model (10) is embedded in a simulation environment (80) for an analysis, the digital model (10) comprising objects (16, 20, 22, 24, 26, 32, 38, 44, 46) which contain geometry data, kinematic data, electrical properties and control function blocks, and the digital model (10) also containing relationships of the objects (16, 20, 22, 24, 26, 32, 38, 44, 46) to one another, design-relevant relationships, function-relevant relationships and sequence-relevant relationships being included in the digital model (10), and a simulation being performed with original control programs of the manufacturing device.

2. Method according to Claim 1, in which there is additionally integrated a function block for an engineering process in which production sequences can be represented and with which process sequences and data flows are represented within the digital model (10) using simulation techniques.

3. Method according to Claim 2, in which the digital model (10) contains additional information which is accessible to a working environment and is used by the latter to guide and manage specific and native data in the process sequence.

4. Method according to one of Claims 1 to 3, in which a coupling to control systems is carried out and the control systems exchange information with the manufacturing devices represented.

5. Method according to Claim 6, in which the control systems correspond to the control systems used in real manufacturing devices.

6. System for assisting in the planning of a manufacturing facility (60) having at least one manufacturing device, which system includes a digital model (10) representing the manufacturing device and containing objects (16, 20, 22, 24, 26, 32, 38, 44, 46) and a simulation environment (80) in which the digital model (10) is embedded, the digital model (10) comprising objects (16, 20, 22, 24, 26, 32, 38, 44, 46) which have geometry data, kinematic data, electrical properties and control function blocks, and the digital model (10) also containing relationships of the objects (16, 20, 22, 24, 26, 32, 38, 44, 46) to one another, design-relevant relationships, function-relevant relationships and sequence-relevant relationships being included in the digital model (10), and a simulation being performed with original control programs of the manufacturing device.

7. System according to Claim 6, in which there is additionally integrated a function block for an engineering process in which production sequences can be represented and with which process sequences and data flows can be represented within the digital model (10) using simulation techniques.

8. System according to Claim 7, in which, to assist the engineering process, the digital model (10) contains additional information which is accessible to a working environment and is used by the latter to guide and manage specific and native data in the process sequence.

9. System according to Claim 6, in which a coupling to control systems is envisaged, by which the control systems exchange information with the manufacturing devices represented.

10. System according to Claim 9, in which the control systems correspond to the control systems used in real manufacturing devices.

11. Electronic unit, with a computing unit and a memory device, a system according to one of Claims 6 to 10 being stored in the memory device and the computing unit serving for carrying out a method according to one of Claims 1 to 5.

12. Computer program with program coding means to carry out all the steps of a method according to one of Claims 1 to 5 when the computer program is run on a computer or a corresponding computing unit, in particular an electronic computing unit according to Claim 11.

13. Computer program product with program coding means which are stored on a computer-readable data carrier to carry out a method according to one of Claims 1 to 5 when the computer program is run on a computer or on a corresponding computing unit, in particular an electronic computing unit according to Claim 11.

## Revendications

1. Procédé pour soutenir les projets de construction d'usines (60) présentant au moins une installation de fabrication, selon lequel on reproduit l'usine (60), sous forme d'un modèle numérique (10) comprenant des objets (16, 20, 22, 24, 26, 32, 38, 44, 46) et ce modèle numérique (10) est installé dans un environnement de simulation (80) pour une analyse, le modèle numérique (10) comprend des objets (16, 20, 22, 24, 26, 32, 38, 44, 46) qui contiennent des données géométriques, des données cinématiques, des propriétés électriques et des modules de fonction relevant de la technique de commande, et le module numérique (10) comprend également des relations des objets (16, 20, 22, 24, 26, 32, 38, 44, 46) les uns avec les autres, à savoir des relations de construction, des relations fonctionnelles et de déroulement dans le module numérique (10), et on développe une simulation se déroulant avec des programmes de commande originaux de l'installation de fabrication.

2. Procédé selon la revendication 1,
selon lequel un bloc de fonction est inclus en supplément pour un procédé d'ingénierie pouvant reproduire des déroulements de production et permettant de reproduire dans le modèle numérique (10) des déroulement de procédés et des flux de données grâce à l'utilisation de la technique de simulation.

3. Procédé selon la revendication 2,
selon lequel le modèle numérique (10) comprend des informations supplémentaires accessibles à un environnement de travail et utilisées par celui-ci pour dévier ou traiter des données natives et spécifiques dans le déroulement du procédé.

4. Procédé selon l'une quelconque des revendications 1 à 3,
selon lequel on réalise un couplage à des systèmes de commande et les systèmes de commande échangent des informations avec les installations de fabrication reproduites.

5. Procédé selon la revendication 6,
selon lequel les systèmes de commande correspondent aux systèmes de commande employés dans des installations de fabrication réelles.

6. Système pour soutenir les projets de construction d'une usine (60) présentant au moins une installation de fabrication, qui comprend un modèle numérique (10) contenant l'usine (60) sous forme d'objets (16, 20, 22, 24, 26, 32, 38, 44, 46) et un environnement de simulation (80) dans lequel ce modèle numérique (10) est inséré, le modèle numérique (10) regroupant des objets (16, 20, 22, 24, 26, 32, 38, 44, 46) qui présentent des données géométriques, des données cinématiques, des propriétés électriques et des blocs de fonction relevant de la technique de commande, et dont le modèle numérique (10) comprend également des relations des objets (16, 20, 22, 24, 26, 32, 38, 44, 46) les uns avec les autres, à savoir des relations de construction, des relations fonctionnelles et de déroulement comprises dans le modèle numérique (10), et on développe une simulation avec des programmes de commande originaux du dispositif de fabrication.

7. Système selon la revendication 6, dans lequel un bloc de fonction est inclus en supplément pour un procédé d'ingénierie pouvant reproduire les déroulements de production et permettant de reproduire dans le modèle numérique (10) des déroulement de procédés et des flux de données grâce à l'utilisation de la technique de simulation.

8. Système selon la revendication 7, dans lequel le modèle numérique (10) comprend pour supporter le procédé d'ingénierie des informations supplémentaires accessibles à un environnement de travail et utilisées par celui-ci pour dévier ou traiter des données natives et spécifiques dans le déroulement du procédé.

9. Système selon la revendication 6, dans lequel on réalise un couplage à des systèmes de commande par lequel les systèmes de commande échangent des informations avec les installations de fabrication reproduites.

10. Système selon la revendication 9, dans lequel les systèmes de commande correspondent aux systèmes de commande employés dans des installations de fabrication réelles.

11. Unité électronique dotée d'une unité de calcul et d'une mémoire, avec un système selon l'une des revendications 6 à 10 enregistré dans la mémoire, et dont l'unité de calcul sert à la réalisation d'un procédé selon l'une quelconque des revendications 1 à 5.

12. Programme informatique avec des moyens de code de programme pour réaliser toutes les étapes d'un procédé selon l'une des revendications 1 à 5, lorsque le programme informatique est exécuté sur un ordinateur ou une unité de calcul correspondante, notamment sur une unité de calcul électronique selon la revendication 11.

13. Programme informatique avec des moyens de code de programme enregistrés sur un support de données à lecture informatique pour réaliser un procédé selon l'une quelconque des revendications 1 à 5 lorsque le programme informatique est exécuté sur un ordinateur ou sur une unité de calcul correspondante, notamment sur une unité de calcul électronique selon la revendication 11.
